(19) **Europäisches Patentamt**

**European Patent Office**

**Office européen des brevets**

(11) **EP 0 786 500 B1**

(12) **EUROPÄISCHE PATENTSCHRIFT**

(45) Veröffentlichungstag und Bekanntmachung des Hinweises auf die Patenterteilung:
**08.11.2000 Patentblatt 2000/45**

(51) Int Cl.[7]: **C09D 5/02**, C09D 201/00, C09D 167/00

(21) Anmeldenummer: **97101089.7**

(22) Anmeldetag: **24.01.1997**

(54) **Wässrige Bindemittellösungen und -dispersionen**

Aqueous binder solutions and dispersions

Solutions et dispersions aqueuses de liant

(84) Benannte Vertragsstaaten:
**AT DE ES FR GB IT NL**

(30) Priorität: **25.01.1996 DE 19602555**

(43) Veröffentlichungstag der Anmeldung:
**30.07.1997 Patentblatt 1997/31**

(73) Patentinhaber: **BASF Coatings Aktiengesellschaft**
**48165 Münster (DE)**

(72) Erfinder:
• **Poth, Ulrich**
**48163 Münster (DE)**

• **Gross, Lutz-Werner**
**45721 Haltern (DE)**

(74) Vertreter: **Fitzner, Uwe, Dr. et al**
**Dres. Fitzner & Münch**
**Rechts- und Patentanwälte**
**Lintorfer Strasse 10**
**40878 Ratingen (DE)**

(56) Entgegenhaltungen:
**US-A- 4 069 183**

**Beschreibung**

Die vorliegende Erfindung betrifft wäßrige Lösungen bzw. Dispersionen von Bindemitteln zur Herstellung wäßriger Lacke, sowie Verfahren zu deren Herstellung.

Bei der Kondensation von Alkoholen mit Carbonsäuren entsteht pro vernetzter Hydroxyl- bzw. Carbonylgruppe ein Molekül Wasser $H_2O$:

$$R_1\text{-OH} + \text{HOOC-}R_2 \rightarrow R_1\text{-O-CO-}R_2 + H_2O$$

Alkohol + Carbonsäure → Ester + Wasser

Da der Ester das interessierende Reaktionsprodukt ist, wird bei den Herstellungsverfahren nach dem Stand der Technik das entstehende Wasser als sog. "Reaktionswasser" aus dem Reaktionsgemisch entfernt. Dieses Reaktionswasser muß, da es in der Regel mit anderen Komponenten der Reaktion kontaminiert ist, entsorgt werden. Ein derartiges Vorgehen ist z. B. in der Lackindustrie bei der Herstellung von Lack-Bindemitteln erforderlich.

In der Lackindustrie fällt bei der Herstellung von Polyestern und Alkydharzen aus Polycarbonsäuren bzw. Polycarbonsäureanhydriden und Polyalkoholen und ggf Monocarbonsäuren durch Kondensationsreaktionen eine Menge von ca. 5 bis 11 % bezogen auf das erzeugte Polymer an Reaktionswasser an. Das Reaktionswasser wird üblicherweise unter Mitwirkung von Schleppmitteln (z.B. Xylol) effektiv aus dem Reaktionsgemisch entfernt.

Das Dampfgemisch aus Reaktionswasser und Schleppmittel wird - vor allem bei der Herstellung von gesättigten Polyestern - über eine Kolonne gefahren, die die Aufgabe hat, flüchtige Polymerbausteine (vor allem niedrige Polyalkohole) durch einen Flüssigkeit/Dampf-Austausch aus dem Dampfgemisch zu separieren und dadurch Verluste dieser Bausteine aus dem Reaktionsgemisch zu vermeiden. Für Polyester und Alkydharze, die keine - bei den Reaktionbedingungen im Reaktor oder mit Wasserdampf - flüchtigen Bestandteile enthalten, wird ein Überströmrohr eingesetzt.

In jedem Fall wird aber das Dampfgemisch dann in einem Kondensator verflüssigt und in einer Trennvorlage aufgefangen. In der Trennvorlage trennen sich eine spezifisch schwerere wäßrige Phase und die spezifisch leichtere organische Phase. Die organische Phase besteht fast ausschließlich aus dem eingesetztem Schleppmittel, sie wird durch einen Überlauf von der wäßrigen Phase getrennt und in den Reaktor ggf. auch gesteuert und durch Einsatz einer Pumpe (ggf. Dosierpumpe) auf den Kopf der Kolonne aufgegeben (Kreisfahrweise).

Es gibt auch die Möglichkeit, ohne Schleppmittel zu fahren. Dann benötigt man keine Trennvorlage, sondern nur eine einfache Vorlage, in die wäßrige Phase aufgefangen wird.

Die wäßrige Phase enthält zwar hohe Anteile an Wasser, ist aber stets mit geringeren Anteilen flüchtiger bzw. wasserdampfflüchtiger Bausteine (meist niedrigere Polyole) bzw. auch mit wasserlöslichen Abbauprodukten aus den Bausteinen des Polyesters kontaminiert. Als Abbauprodukte können Monoalkohole, partielle Aldehyde von Polyolen, Acetale, in besonderen Fällen auch cyclische sauerstoffhaltige Verbindungen entstehen und in der wäßrigen Phase des Reaktionswassers enthalten sein.

Eine Abtrennung der Nebenbestandteile aus der wäßrigen Phase bei der Herstellung von Polyestern und Alkydharzen durch Destillation oder Extraktion ist aufwendig und führt nicht zu wiedereinsetzbaren Stoffen. Eine einfache Entsorgung des Destillats z.B. über Klärbecken ist ein Risiko. Üblicherweise werden daher die Reaktionswässer trotz ihres geringen Anteils an organischen Bestandteilen verbrannt, meist gemeinsam mit anderen Reststoffen, die reicher an organischen Substanzen sind. Dazu ist eine Separation und Lagerung der Reaktionswässer und eine spezielle Steuerung bei der Zuführung in den Verbrennungsofen erforderlich.

Aufgrund ihrer ökologischen Vorteile werden in den vergangenen Jahren in der Lackindustrie zunehmend wasserverdünnbare Lacke eingesetzt. Bei diesen kann weitgehend oder völlig auf organische Lösemittel verzichtet werden, welche durch ihr Verdampfen beim Trocknen des Lackes zu Emissionen und den damit verbundenen, bekannten Umweltproblemen führen. Bei der Herstellung solcher wäßriger Lacksysteme sind die Bindemittel des Lackes in eine wäßrige Lösung bzw. Dispersion zu bringen. Derartige Dispersionen sind sehr instabil. Schon geringe Mengen von Verunreinigungen können die Dispergierfähigkeit der Bindemittel zerstören bzw. stark behindern. So kann z.B. eine derartige Lösung nicht mit Gebrauchswasser (Trinkwasser, Stadtwasser), welches anorganische Bestandteile enthält, hergestellt werden. Es muß daher deionisiertes oder destilliertes Wasser eingesetzt werden. Dies bedeutet einen erhöhten Herstellungsaufwand und damit auch erhöhte Herstellungskosten.

Wäßrige Beschichtungszusammensetzungen enthaltend ein Bindemittel und Wasser, welches bei der Kondensation eines Polyalkoholes und einer Polycarbonsäure erhalten wurde, sind schon aus der US-A-4,069,183 bekannt. In dieser Schrift wird jedoch nicht die Abtrennung des so erhaltenen Kondensationswassers und die spätere Zugabe dieses Reaktionswassers zu einer Beschichtungszusammensetzung beschrieben.

Die vorliegende Erfindung hat sich die Aufgabe gestellt, die geschilderten Nachteile des Standes der Technik zu vermeiden, die insbesondere bei der Entsorgung von Reaktionswasser sowie bei der Herstellung von Bindemitteldispersionen auftreten.

Diese Aufgabe wird erfindungsgemäß gelöst durch eine wäßrige Lösung oder Dispersion eines Bindemittels zur Herstellung wäßriger Lacke, welche als zumindest eine wäßrige Komponente Wasser enthält, welches durch Kondensation von Alkoholen mit Carbonsäuren herstellbar ist und aus dem Kondensationsgemisch abgetrennt wird, bevor es einer Bindemitteldispersion zugesetzt wird.

Es wurde überraschenderweise gefunden, daß bei der Herstellung von Polyestern oder Alkydharzen (die dann vorzugsweise für wasserverdünnbare Lacksysteme eingesetzt werden) das Reaktionswasser einen Teil des sonst zur Herstellung der wäßrigen kolloidalen Lösung bzw. Dispersion des Polyesters oder Alkydharzes verwendeten deionisierten oder destillierten Wassers ersetzen kann. Im Unterschied zu Gebrauchswasser (Trinkwasser, Stadtwasser), das bestimmte Anteile anorganischer Bestandteile enthält, die die Verwendbarkeit zur Herstellung wäßriger kolloidaler Lösungen oder Dispersionen von Lackbindemitteln beeinträchtigen, kann man mit Anteilen der Reaktionswässer stabile wäßrige kolloidale Lösungen herstellen. Der Einsatz dieser wäßrigen Polyester- oder Alkydharzlösungen oder Dipersionen in wäßrigen Lacksystemen beeinflußt deren Eigenschaften nur unwesentlich. Dieser Effekt war angesichts der Empfindlichkeit der Bindemitteldispersionen gegenüber Verunreinigungen völlig überraschend. Aufgrund der üblichen Erfahrungen wäre das Gegenteil zu erwarten gewesen. Es zeigt sich jedoch, daß die Nebenbestandteile in den meisten Fällen wie Cosolventien wirken. Wenn wäßrige Lacksysteme in Applikationsstraßen mit Einbrennöfen eingesetzt werden - das ist bei der industriellen Verwendung von wäßrigen Lacksystemen der Regelfall - werden die oben genannten Begleitstoffe des Reaktionswassers erst im Einbrennofen flüchtig, ein Teil nimmt aber auch an der Filmbildung (z.B. Reaktion mit Aminharzen) teil. Eine Umweltbelastung durch die Bestandteile ist daher weitgehend ausgeschlossen, die Abluft von Einbrennöfen enthält auf jeden Fall organische Spaltprodukte und wird daher durch katalytisch Prozesse oder Filtern gereinigt.

Im folgenden soll unter Reaktionswasser immer das bei der Kondensation von Alkoholen mit Carbonsäuren abgespaltene und aus dem Kondensationsgemisch abgetrennte Wasser bezeichnet werden.

Erfindungsgemäß wird vorzugsweise das Reaktionswasser von Reaktionen genommen, bei welchem die Alkohole als Polyalkohole vorliegen, wobei unter Polyol eine organische Verbindung verstanden wird, die mindestens 2 Hydroxylgruppen trägt. Geeignete Polyole sind z.B. Ethylenglykol, Propandiole, Butandiole, Pentandiole, Neopentylglykol, Hexandiole, Diethylenglykol, Glycerin, Trimethylolethan, Trimethylolpropan, Pentaerythrit, Dipentaerythrit, Hydroxypivalinsäureneopentylglykolester, 2-Methyl-2-propyl-propandiol-1,3, 2,2,4-Trimethylpentandiol-1,3 und 2,2,5-Trimethylhexandiol-1,6 Bevorzugt werden Neopentylglykol, Hexandiol-1,6 und Hydroxypivalinsäureneopentylglykolester eingesetzt. Selbstverständlich können die Polyole rein oder als Gemische eingesetzt werden.

Bei der erfindungsgemäßen Herstellung des Reaktionswassers kommen vorzugsweise Polycarbonsäuren zum Einsatz. Dabei kann es sich um eine mindestens drei Carboxylgruppen enthaltende Polycarbonsäure bzw. deren Derivate (z.B. Anhydrid, Ester oder Halogenid) handeln. Ebenso kann ein Gemisch solcher Säuren bzw. Säurederivate eingesetzt werden. Als Beispiele seinen Trimellithsäure, Trimesinsäure (1,3,5-Benzoltricarbonsäure), Pyromellithsäure und trimere Fettsäuren genannt. Bevorzugt wird Trimellithsäure eingesetzt.

Als Carbonsäure kann auch ein Polyol eingesetzt werden, das mindestens eine Carboxylgruppe aufweist. Vorzugsweise wird Dimethylolpropionsäure eingesetzt. Ebenso kann jede zur Herstellung von Polyestern geeignete zwei Carboxylgruppen enthaltende Polycarbonsäure bzw. ein reaktives Derivat (z.B. Anhydrid, Ester oder Halogenid) oder ein Gemisch solcher Säuren bzw. Säurederivate eingesetzt werden. Als Beispiele für geeignete Säuren seien genannt: Phthalsäure, Isophthalsäure, Terephthalsäure, Fumarsäure, Maleinsäure, Endomethylentetrahydrophthalsäure, Bernsteinsäure, Adipinsäure, Korksäure, Acelainsäure, Sebacinsäure und dimere Fettsäuren. Bevorzugt werden Phthalsäure, Isophthalsäure, Adipinsäure und dimere Fettsäuren eingesetzt.

Die erfindungsgemäße wäßrige Lösung oder Dispersion eines Bindemittels kann als wäßrige Komponente ein Gemisch aus dem Reaktionswasser gemäß der Erfindung und aus deionisiertem Wasser enthalten. Dies ist z.B. dann sinnvoll, wenn produktionsbedingt nicht genug Reaktionswasser zur Verlügung steht, um die gewünschte Menge an Dispersion herzustellen. Vorzugsweise enthält die wäßrige Komponente 0,1 bis 80 Gew.-%, ganz besonders bevorzugt 1 bis 20 Gew.-% des Reaktionswassers im Sinne der Erfindung.

Als Bindemittel, von denen eine wäßrige Lösung oder Dispersion hergestellt werden soll, kommen grundsätzlich alle bekannten Bindemittel für diesen Zweck in Frage. Insbesondere sind als Bindemittel geeignet: Polyester-, Alkyd-, Acrylat-, Epoxid-, Polyurethan- und/oder epoxidmodifizierte Polyesterharze sowie Modifikationen der genannten Bindemittel. Die Herstellung epoxidmodifizierter Polyesterharze erfolgt z.B. nach an sich bekannten Verfahren.

Die erfindungsgemäßen wasserverdünnbaren Beschichtungszusammensetzungen können im Prinzip alle für wasserverdünnbare Beschichtungszusammensetzungen geeigneten Bindemittel enthalten.

Als Bindemittel sind demgemäß sowohl veredelte Naturprodukte, z.B. aus Kolophonium und Ölen oder Cellulosenitraten als auch vollsynthetisch aufgebaute Harze verwendbar. Zu letzteren zählen u.a. Phenolharze, Aminharze (z.B. Harnstoff-, Melaminharze), Alkydharze, Polyvinylacetate, Epoxidharze, Polyurethanharze, Polyesterharze, mit Kolophonium modifizierte Phenolharze, Chlorkautschuke, chloriertes Polypropylen, Cyclokautschuke, Ketonharze und Acrylatharze.

Insbesondere werden als Bindemittel wasserverdünnbare bzw. wasserdispergierbare und in organischer Lösung darstellbare Polyurethanharze, Polyacrylatharze, Polyesterharze und Aminoplastharze sowie deren Mischungen eingesetzt.

Die als Bindemittel eingesetzten Polyurethanharze sind prinzipiell bekannt. Geeignet sind beispielsweise die in der Literatur für den Einsatz in Wasserbasislacken beschriebenen Polyurethanharze, sofern diese Polyurethanharze - in Abwandlung der in der jeweiligen Literatur beschriebenen Herstellung - in Form organischer Lösungen darstellbar sind.

Beispiele für geeignete Polyurethanharze sind die in den folgenden Schriften beschriebenen Harze: EP-A-355433, DE-OS 3545618, DE-OS 3813866 sowie die noch nicht veröffentliche deutsche Patentanmeldung DE 4005961.8.
Bezüglich näherer Einzelheiten der Herstellung der Polyurethanharze und Beispiele geeigneter Verbindungen sei daher auf diese Schriften verwiesen.

Die als Bindemittel eingesetzten Polyacrylatharze sind ebenfalls bekannt und beispielsweise in DE-OS 3832826 beschrieben. Geeignet sind allgemeine wasserverdünnbare bzw. wasserdispergierbare Polyacrylatharze, die sich in Form organischer Lösungen darstellen lassen.

Als Bindemittel geeignet sind auch wasserverdünnbare bzw. wasserdispergierbare und in Form organischer Lösungen darstellbare Polyesterharze. Eingesetzt werden beispielsweise entsprechende handelsübliche wasserverdünnbare bzw. wasserdispergierbare Polyesterharze sowie die überlicherweise in Wasserbasislacken eingesetzten Polyesterharze.

Als Bindemittel sind auch wasserverdünnbare bzw. wasserdispergierbare Aminoplastharze geeignet. Bevorzugt werden wasserverdünnbare Melaminharze eingesetzt. Es handelt sich hierbei im allgemeinen um veretherte Melamin-Formaldehyd-Kondensationsprodukte.
Die Wasserlöslichkeit der Aminoplastharze hängt - abgesehen vom Kondensationsgrad, der möglichst gering sein soll - von der Veretherungskomponente ab, wobei nur die niedrigsten Glieder der Alkohol bzw. Ethylenglykolmonoetherreihe wasserlösliche Kondensate ergeben. Die größte Bedeutung haben die mit Methanol veretherten Melaminharze. Bei Verwendung von Lösungsvermittlern können auch butanolveretherte Melaminharze in wäßriger Phase dispergiert werden. Es besteht auch die Möglichkeit, Carboxylgruppen in das Kondensat einzufügen. Umetherungsprodukte hochveretherter Formaldehydkondensate mit Oxycarbonsäuren sind über ihre Carboxylgruppen nach Neutralisation wasserlöslich und können in den Basisfarben enthalten sein.

Als Bindemittel können selbstverständlich auch Mischungen der genannten Bindemittel sowie zusätzlich oder alleine andere wasserverdünnbare bzw. wasserdispergierbare Bindemittel eingesetzt werden.

Die erfindungsgemäßen Überzugsmittel können übliche Zusätze wie Lösungsmittel, Füllstoffe, Weichmacher, Stabilisatoren, Netzmittel, Dispergierhilfsmittel, Verlaufsmittel, Entschäumer und Katalysatoren, sowie Additive einzeln oder im Gemisch in den üblichen Mengen enthalten. Diese Substanzen können den Einzelkomponenten und/oder der Gesamtmischung zugesetzt werden.

Geeignete Füllstoffe sind z.B. Talkum, Glimmer, Kaolin, Kreide, Quarzmehl, Asbestmehl, Schiefermehl, Bariumsulfat, verschiedene Kieselsäuren, Silikate, Glasfasern, organische Fasern oder dergleichen.

Die erfindungsgemäßen Überzugsmittel können neben Wasser die üblichen Lösungsmittel, beispielsweise aliphatische oder aromatische Kohlenwasserstoffe, ein- oder mehrwertige Alkohole, Ether, Ester, Glykolether sowie deren Ester, Ketone wie z.B. Toluol, Xylol, Butanol, Ethyl- oder Butylglykol (= Ethylenglykolmonoethyl- oder -Butylether) sowie deren Acetate, Butyldiglykol (Ethylenglykoldibutylether), Ethylenglykoldimethylether, Diethylenglykoldimethylether, Cyclohexanon, Methylethylketon, Aceton, Isophoron oder Mischungen davon entalten.

Weiterhin können den erfindungsgemäßen Basislacken vernetzte polymere Mikroteilchen, wie sie z.B. in der EP-A-38 127 offenbart sind und/oder übliche anorganische oder organische Additive zugesetzt werden. So wirken als Verdicker beispielsweise wasserlösliche Celluloseether, wie Hydroxyethylcellulose, Methylcellulose oder Carboxymethylcellulose sowie synthetische Polymere mit ionischen und/oder assoziativ wirkenden Gruppen, wie Polyvinylalkohol, Poly(meth)acrylsäure, Polyvinylpyrrolidon, Styrol-Maleinsäureanhydrid oder Ethylen-Maleinsäureanhydrid-Copolymere und ihre Derivate oder auch hydrophob modifizierte ethoxylierte Piperidin und Triethanolamin verwendet. Besonders bevorzugt werden tertiäre Amine als Neutralisationsmittel eingesetzt, insbesondere Dimethylethanolamin, Triethylamin, Tripropylamin und Tributylamin.

Die erfindungsgemäßen Basisbeschichtungszusammensetzungen können alle bekannten und in der Lackindustrie üblichen Pigmente oder Farbstoffe enthalten.

Als Farbstoffe bzw. Pigmente, die anorganischer oder organischer Natur sein können, werden beispielsweise genannt Titandioxid, Graphit, Ruß, Zinkchromat, Strontiumchromat, Bariumchromat, Bleichromat, Bleicyanamid, Bleisilicochromat, Zinkoxid, Cadmiumsulfid, Chromoxid, Zinksulfid, Nickeltitangelb, Chromtitangelb, Eisenoxidrot, Eisenoxidschwarz, Ultramarinblau, Phthalocyaninkomplexe, Naphtholrot, Chinacridone, halogenierte Thioindigo-Pigmente oder dergleichen.

Als besonders bevorzugte Pigmente werden Metallpulver einzeln oder im Gemisch wie Kupfer, Kupferlegierungen, Aluminium und Stahl, vorzugsweise Aluminiumpulver, in wenigstens überwiegendem Anteil eingesetzt, und zwar in einer Menge von 0,5 bis 25 Gew.-% bezogen auf den gesamten Festkörpergehalt der Überzugsmittel an Bindemitteln. Als metallische Pigmente werden solche handelsüblichen Metallpulver bevorzugt, die für wäßrige Systeme speziell vorbehandelt sind.

Die Metallpulver können auch zusammen mit einem oder mehreren der obengenannten nichtmetallischen Pigmente bzw. Farbstoffe eingesetzt werden. In diesem Fall wird deren Anteil so gewählt, daß der erwünschte Metallic-Effekt nicht unterdrückt wird.

Die erfindungsgemäße Bindemittellösung oder -dispersion wird vorzugsweise zur Herstellung von wäßrigen Lacken verwendet. Zu diesem Zweck wird sie zusammen mit Vernetzern (z.B. Aminoharze, insbesondere solchen von Typ Hexamethoxymethylmelamin, Harnstoffharz, wasserverdünnbarer Epoxidharz und dgl.) ggfs. weiteren Bindemitteln, Pigmenten, Füllstoffen und weiteren üblichen Additiven zu einem wäßrigen Lack weiterverarbeitet. Neben Wasser kann dieser auch in untergeordnetem Maße organische Lösemittel als Verdünnungsmittel enthalten.

Zum Umfang der vorliegenden Erfindung gehört auch der wäßrige Lack, der durch den Einsatz der beschriebenen Bindemittellösung oder -dispersion gewonnen wird. Die vorliegende Erfindung war unter anderem von der Aufgabe ausgegangen, die mit dem bei Kondensationsreaktionen auftretenden Reaktionswasser verbundenen Probleme zu vermeiden. Nach dem Stand der Technik wird dieses Reaktionswasser nach seiner Abtrennung vom Reaktionsgemisch auf aufwendige Weise entsorgt. Die Erfindung schlägt dagegen vor, das Reaktionswasser als eine wäßrige Komponente bei der Herstellung wäßriger Dispersionen oder Lösungen organischer Substanzen einzusetzen. Beispiele solcher Substanzen bzw. eines solchen Einsatzes ist die oben beschriebene Herstellung wäßriger Bindemitteldispersionen und -lösungen. Es ist jedoch offensichtlich, daß die Verwendung des Reaktionswassers nicht auf diese speziellen Stoffgruppen beschränkt ist. Vielmehr kann das Reaktionswasser immer dann als Lösemittel eingesetzt werden, wenn die Kontaminationen, die es eventuell noch enthält, für die herzustellende Dispersion oder Lösung unschädlich sind. Der Vorteil eines solchen Reaktionswassers ist, daß seine Zusammensetzung bzw. die in ihm enthaltenen möglichen Begleitstoffe sehr genau bekannt sind, wenn man die Edukte der zugrunde liegenden Kondensationsreaktion kennt. Insbesondere hat das Reaktionswasser keine anorganischen Verunreinigungen, wie sie übliches Gebrauchswasser hat.

Die Erfindung betrifft auch ein Verfahren zur Herstellung von Bindemittellösungen oder -dispersionen für wäßrige Lacke, welches durch die folgenden Schritte gekennzeichnet ist:

a) bei der Kondensation von Alkoholen und Carbonsäuren abgespaltenes Reaktionswasser wird aus dem Kondensationsgemisch abgetrennt,
b) ggfs. wird das abgetrennte Reaktionswasser mit deionisiertem Wasser gemischt, und
c) das Bindemittel wird in der gemäß a) und b) gewonnenen wäßrigen Komponente gelöst oder dispergiert.

Das Reaktionswasser im Verfahrensschritt a) kann grundsätzlich aus einer Kondensationsreaktion stammen, die mit dem betreffenden Bindemittel nichts zu tun hat. Vorzugsweise wird jedoch mit der Kondensationsreaktion nach Schritt a) zumindest ein Teil des Bindemittels hergestellt. Denn besonders rationell ist das Verfahren, bei dem man das Reaktionswasser eines Polyesters oder Alkydharzes, die in wäßrigen Lacksystemen eingesetzt werden, direkt durch Dekantieren aus der Trennvorlage bei der Herstellung der wäßrigen kolloidalen Lösung des betroffenen Polyesters in einem meist an den Reaktor angeschlossenen Verdünnungskessel einsetzt.

Im folgenden wird die Erfindung anhand eines Ausführungsbeispiels geschildert.

1. Übliche Herstellung eines Polyesters (vgl. EP 0 269 828)

442,4 g Hexandiol-1,6 und 166,6g einer technischen polymeren Fettsäure (Dimerengehalt mindestens 80 Gew.%, Trimerengehalt höchstens 20 Gew.%, Monomerenanteil höchstens 1 Gew.%) werden in einem mittels Wärmeträgeröl beheizbaren Edelstahlreaktionskessel, der mit einem Ankerrührer, Füllkörperkolonne, Brüdenkondensator mit Vorlage, Schutzgaszuleitung ($N_2$) und Temperaturfühlern für die Reaktionsguttemperatur und die Brüdentemperatur am Kolonnenkopf versehen ist, eingewogen und auf 130°C aufgeheizt. Dann werden 184,3 g Isophthatsäure zugegeben und weiter aufgeheizt. Sobald sich Kondensationswasser bildet (ab etwa 160°C), wird die Reaktionsguttemperatur so langsam unter Abdestillieren des Kondensationswassers bis auf höchstens 220°C gesteigert, daß die Brüdentemperatur am Kolonnenkopf 103°C nicht übersteigt. Es wird bei 220°C so lange kondensiert, bis das Reaktionsgut eine Säurezahl von 10,5 erreicht hat. Nach Abkühlen auf 140°C werden portionsweise 266,7 g Trimellithsäureanhydrid in das Reaktionsgut unter Rühren eingetragen. Danach wird auf 150°C aufgeheizt und so lange verestert, bis das Reaktionsgut eine Säurezahl von 67,7 erreicht hat. Dann wird auf 120°C abgekühlt und mit Ethylenglykolmonobutylether so verdünnt, daß eine Lösung mit 85 Gew.% Feststoffgenalt (bestimmt nach 60-minütiger Trocknung bei 130°C in einem Umlufttrockenschrank) erhalten wird. Eine mit Ethylenglykolmonobutylether auf 50 Gew.% verdünnte Probe zeigt eine Lösungsviskosität von 420 mPas (23°C ICI Platte-Kegel-Viskosimeter).

Die 85%ige Polyesterlösung wird auf 140°C erwärmt und mit 209,8 g eines Epoxidharzes aus Bisphenol-A und Epichlorhydrin mit einem Epoxidäquivalentgewicht von 490 portionsweise unter Rühren versetzt. Dann wird bei 140°C solange umgesetzt, bis ein Epoxidäquivalentgewicht von mehr als 50.000 und eine Säurezahl von 42,1 (bezogen auf Festkörper) erreicht worden sind. Danach wird auf 100°C abgekühlt und mit 64,6 g N,N-Dimethylethanotamin neutralisiert. Das Reaktionsgut wird dann unter Rühren in 2.000 g deionisiertes Wasser, das auf 60°C erwärmt wurde, abgelassen, und durch intensives Rühren wird eine stabile Bindemitteldispersion erzeugt, die mit 180 g deionisiertem Wasser und N,N-Dimethylothanolamin auf einen Festkörper von 35 Gew.% (bestimmt nach 60-minütiger Trocknung bei 130°C in einem Umlufttrockenschrank) und einen pH-Wert bei 23°C von 6,67 eingestellt.

2. Erfindungsgemäße Abwandlung der Polyesterherstellung

Es wird wie unter 1. geschildert verfahren. Bei den ersten beiden Reaktionsschritten fällt 79,04 g Reaktionswasser an. Im Unterschied zu dem genannten Verfahren wird die beschriebene Wasserzugabe von 180 g um diese Menge gekürzt, das genannte Reaktionswasser wird in einem Dekanter von der organischen Phase getrennt und dann nach der ersten Wasserzugabe zu der kolloidalen wäßrigen Polyesterlösung zugegeben, und dann 100,96 g deionisiertes Wasser als Einstellmenge.

Die so hergestellte Polyesterlösung wurde im Vergleich mit der nach dem üblichen Verfahren hergestellten Polyesterlösung geprüft. Beide Lösungen sind schwach opak und stabil, sie zeigen nach Alterung von 5 Tagen bei 40 °C eine ausreichende vergleichbare Stabilität (Säurezahl, pH -Wert, Viskosität). Mit beiden Polyestern wurden wie in der EP 0 269 828 beschrieben Wasserfüller formuliert, appliziert und verglichen. Es gibt keine signifikanten Unterschiede im Applikationsverhalten (Verlauf, Glanz, Decklackstand) oder in den technischen Eigenschaften der Wasserfüller (Härte, Elastizität und Steinschlagfestigkeit).

**Patentansprüche**

1.  Wäßrige Lösung oder Dispersion eines Bindemittels zur Herstellung wäßriger Lacke,
    **dadurch gekennzeichnet**, daß sie als eine wäßrige Komponente Wasser enthält, das erhältlich ist als abgetrenntes Reaktionswasser aus einer Kondensationsreaktion eines Alkohols mit einer Carbonsäure.

2.  Wäßrige Lösung oder Dispersion nach Anspruch 1,
    **dadurch gekennzeichnet**, daß als Alkohole Polyalkohole, vorzugsweise Ethylenglykol, Propandiole, Butandiole, Pentandiole, Hexandiole, Diethylenglykol, Glycerin, Trimethylolethan, Trimethylolpropan, Pentaerythrit, Dipentaerythrit, 2-Methyl-2-propyl-propandiol-1,3, 2,2,4-Trimethylpentandiol-1,3 und 2,2,5-Trimethylhexandiol-1,6, ganz besonders bevorzugt Neopentylglykol, Hexandiol-1,6 und Hydroxypivalinsäureneopentylglykolester verwendet werden.

3.  Wäßrige Lösung oder Dispersion nach einem der Ansprüche 1 oder 2,
    **dadurch gekennzeichnet**, daß als Carbonsäuren Polycarbonsäuren, vorzugsweise Trimellithsäure, Trimesinsäure (1,3,5-Benzoltricarbonsäure), Pyromellithsäure und trimere Fettsäuren, und/oder Polyole, die mindestens eine Carboxylgruppe aufweisen, oder deren reaktive Derivate, vorzugsweise Dimethylolpropionsäure, Phthalsäure, Isophthalsäure, Terephthalsäure, Fumarsäure, Maleinsäure, Endomethylen-tetrahydrophthalsäure, Bernsteinsäure, Adipinsäure, Korksäure, Acelainsäure, Sebacinsäure und dimere Fettsäuren, verwendet werden.

4.  Wäßrige Lösung oder Dispersion nach einem der Ansprüche 1 bis 3,
    **dadurch gekennzeichnet**, daß es ein Gemisch aus Reaktionswasser nach einem der Ansprüche 1 bis 3 und deionisiertem Wasser enthält.

5.  Wäßrige Lösung oder Dispersion nach einem der Ansprüche 1 bis 4,
    **dadurch gekennzeichnet,** daß die wäßrige Komponente 0,1 bis 80 Gew.-%, vorzugsweise 1 bis 20 Gew.-% eines Reaktionswassers nach einem der Ansprüche 1 bis 3 enthält.

6.  Wäßrige Lösung oder Dispersion nach einem der Ansprüche 1 bis 5,
    **dadurch gekennzeichnet**, daß sie als Bindemittel Polyester-, Alkyd-, Acrylat-, Epoxid-, Polyurethan- und/oder epoxidmodifizierte Polyesterharze enthält oder Modifikationen hiervon.

7.  Verwendung der Bindemittellösung oder Dispersion nach einem der Ansprüche 1 bis 6 zur Herstellung von wäßrigen Lacken.

8.  Wäßriger Lack enthaltend wenigstens eine Bindemittellösung oder -dispersion nach einem Ansprüche 1 bis 6.

9.  Verfahren zur Herstellung von Bindemittellösungen oder -dispersionen für wäßrige Lacke,
    **dadurch gekennzeichnet**, daß

    a) bei der Kondensation von Alkoholen und Carbonsäuren abgespaltenes Reaktionswasser aus dem Kondensationsgemisch abgetrennt wird,

b) ggfs. das abgetrennte Reaktionswasser mit deionisiertem Wasser gemischt wird, und

c) das Bindemittel in der gemäß a) und b) gewonnenen wäßrigen Komponente gelöst oder dispergiert wird.

**10.** Verfahren nach Anspruch 9, **dadurch gekennzeichnet**, daß mit der Kondensationsreaktion nach Schritt a) zumindest ein Teil des Bindemittels hergestellt wird.

## Claims

**1.** Aqueous solution or dispersion of a binder for preparing aqueous coating materials, characterized in that as an aqueous component it includes water which is obtainable as reaction water which has been separated off from a condensation reaction of an alcohol with a carboxylic acid.

**2.** Aqueous solution or dispersion according to claim 1, characterized in that alcohols used are polyalcohols, preferably ethylene glycol, propanediols, butanediols, pentanediols, hexanediols, diethylene glycol, glycerol, trimethylolethane, trimethylolpropane, pentaerythritol, dipentaerythritol, 2-methyl-2-propyl-1,3-propanediol, 2,2,4-trimethyl-1,3-pentanediol and 2,2,5-trimethyl-1,6-hexanediol, and with very particular preference neopentylglycol, 1,6-hexanediol and neopentylglycol hydroxypivalate.

**3.** Aqueous solution or dispersion according to one of claims 1 or 2, characterized in that carboxylic acids used are polycarboxylic acids, preferably trimellitic acid, trimesic acid (1,3,5-benzenetricarboxylic acid), pyromellitic acid and trimeric fatty acids, and/or polyols having at least one carboxyl group, or reactive derivatives thereof, preferably dimethylolpropionic acid, phthalic acid, isophthalic acid, terephthalic acid, fumaric acid, maleic acid, endomethylenetetrahydrophthalic acid, succinic acid, adipic acid, suberic acid, acelaic [sic] acid, sebacic acid and dimeric fatty acids.

**4.** Aqueous solution or dispersion according to one of claims 1 to 3, characterized in that it includes a mixture of water of reaction according to one of claims 1 to 3 and deionized water.

**5.** Aqueous solution according to one of claims 1 to 4, characterized in that the aqueous component includes from 0.1 to 80 % by weight, preferably from 1 to 20 % by weight, of a water of reaction according to one of claims 1 to 3.

**6.** Aqueous solution or dispersion according to one of claims 1 to 5, characterized in that as binders it includes polyester, alkyd, acrylate, epoxy, polyurethane and/or epoxide-modified polyester resins or modifications thereof.

**7.** Use of the binder solution or dispersion according to one of claims 1 to 6, for preparing aqueous coating materials.

**8.** Aqueous coating material including at least one binder solution or binder dispersion according to one [lacuna] claims 1 to 6.

**9.** Process for preparing binder solutions or binder dispersions for aqueous coating materials, characterized in that

a) water of reaction eliminated during the condensation of alcohols and carboxylic acids is separated off from the condensation mixture,

b) if desired, the water of reaction separated off is mixed with deionized water, and

c) the binder is dissolved or dispersed in the aqueous component obtained in accordance with a) and b).

**10.** Process according to claim 9, characterized in that at least some of the binder is prepared by the condensation reaction of step a).

## Revendications

**1.** Solution ou dispersion aqueuse d'un liant pour la production de revêtements aqueux, caractérisée en ce qu'elle contient de l'eau en tant que composant aqueux, laquelle peut être obtenue sous forme d'eau de réaction séparée à partir d'une réaction de condensation d'un alcool avec un acide carboxylique.

**2.** Solution ou dispersion aqueuse selon la revendication 1, caractérisée en ce que l'on utilise, en tant qu'alcools, des polyalcools, de préférence l'éthylèneglycol, des propanediols, des butanediols, des pentanediols, des hexanediols, le diéthylèneglycol, le glycérol, le triméthyloléthane, le triméthylolpropane, le pentaérythritol, le dipentaérythritol, le 2-méthyl-2-propyl-1,3-propanediol, le 2,2,4-triméthyl-1,3-pentanediol et le 2,2,5-triméthyl-1,6-hexanediol, tout particulièrement préférablement le néopentylglycol, le 1,6-hexanediol et des esters hydroxypivaliques de néopentylglycol.

**3.** Solution ou dispersion aqueuse selon l'une quelconque des revendications 1 ou 2, caractérisée en ce que l'on utilise, en tant qu'acides carboxyliques, des acides polycarboxyliques, de préférence l'acide trimellitique, l'acide trimésique (l'acide 1,3,5-benzènetricarboxylique), l'acide pyromellitique et des acides gras trimères, et/ou des polyols renfermant au moins un groupe carboxy, ou leurs dérivés réactifs, de préférence l'acide diméthylolpropionique, l'acide phtalique, l'acide isophtalique, l'acide téréphtalique, l'acide fumarique, l'acide maléique, l'acide endométhylènetétrahydrophtalique, l'acide succinique, l'acide adipique, l'acide subérique, l'acide azélaïque, l'acide sébacique et des acides gras dimères.

**4.** Solution ou dispersion aqueuse selon l'une quelconque des revendications 1 à 3, caractérisée en ce qu'elle contient un mélange d'eau de réaction selon l'une quelconque des revendications 1 à 3 et d'eau désionisée.

**5.** Solution ou dispersion aqueuse selon l'une quelconque des revendications 1 à 4, caractérisée en ce que le composant aqueux contient 0,1 à 80% en poids, de préférence de 1 à 20% en poids d'une eau de réaction selon l'une quelconque des revendications 1 à 3.

**6.** Solution ou dispersion aqueuse selon l'une quelconque des revendications 1 à 5, caractérisée en ce qu'elle contient, en tant que liants, des résines de polyester, alkydes, d'acrylate, époxy, de polyuréthane et/ou de polyester epoxy-modifiées ou des modifications de celles-ci.

**7.** Utilisation de la solution ou dispersion de liant selon l'une quelconque des revendications 1 à 6, pour la production de revêtements aqueux.

**8.** Revêtement aqueux contenant au moins une solution ou dispersion de liant selon l'une quelconque des revendications 1 à 6.

**9.** Procédé de préparation de solutions ou dispersions de liants pour revêtements aqueux, caractérisé en ce que

a) l'eau de réaction éliminée lors de la condensation d'alcools et d'acides carboxyliques est séparée du mélange de condensation,
b) l'eau de réaction séparée est éventuellement mélangée avec de l'eau désionisée, et
c) le liant est dissous ou dispersé dans le composant aqueux obtenu conformément à a) et b).

**10.** Procédé selon la revendication 9, caractérisé en ce que l'on prépare au moins une partie du liant conjointement à la réaction de condensation, après l'étape a).